# EUROPÄISCHE PATENTSCHRIFT

(11) **EP 3 788 878 B1**
(45) Veröffentlichungstag und Bekanntmachung des Hinweises auf die Patenterteilung: **07.06.2023**
(21) Anmeldenummer: 19195112.8
(22) Anmeldetag: 03.09.2019
(51) Int. Cl.: A21C 1/02, A21C 1/14, B01F 29/83, B01F 35/45

(54) **KNETMASCHINE FÜR TEIGE MIT ABSTREIFRING**
DOUGH KNEADING MACHINE WITH STRIPPING RING
MACHINE À PÉTRIR POUR PÂTES DOTÉE DE LA BAGUE DE RACLAGE

(43) Veröffentlichungstag der Anmeldung: 10.03.2021
(73) Patentinhaber: DIOSNA Dierks & Söhne GmbH, 49086 Osnabrück (DE)
(72) Erfinder: GHANI, Hashem, 49086 Osnabrück (DE)
(74) Vertreter: Lenzing Gerber Stute

(56) Entgegenhaltungen:
- EP-A1- 2 845 483
- DE-A1- 3 707 404
- DE-C- 486 947
- US-A- 3 434 697
- US-A1- 2014 226 433

## Beschreibung

Die vorliegende Erfindung betrifft eine Knetmaschine für Teige mit den Merkmalen des Oberbegriffs des Anspruchs 1, sowie ein Verfahren zum Abstreifen eines Verschlusskörpers einer Verschlusseinrichtung eines am Boden offenen Knetbottichs einer Knetmaschine für Nahrungsmittelteige mit den Merkmalen des Oberbegriffs des Anspruchs 8.

Knetmaschinen für Teige, insbesondere Backteige, weisen einen Knetbottich unterschiedlicher Größe für Teigmassen von 100 bis 1000 kg auf, in den jeweils ein motorisch antreibbares Knetwerkzeug zur Durchführung des Knetvorganges einbringbar ist. Es sind Knetmaschinen mit Entleerungsvorrichtung im Boden des Knetbottichs bekannt. Ist der Knetvorgang abgeschlossen, wird der Teig durch diese Entleerungsvorrichtung nach unten aus dem geöffneten Knetbottich ausgegeben und kann mithilfe eines Transportsystems an beispielsweise einen Linienportionierer weitergegeben werden.

Die Entleerungsvorrichtung umfasst dabei herkömmlicherweise einen Verschlusskörper, der eine Bodenöffnung des Knetbottichs in einer Verschlussstellung verschließt und diese Öffnung zum Austrag des Knetteigs in einer Austragsstellung freigibt. Um sicherzustellen, dass an dem Verschlusskörper an der dem Innenraum des Knetbottichs zugewandten Seite kein Teig anhaftet, ist ein Linearabstreifer, wie zum Beispiel in EP 2 845 483 A1 offenbart, vorgesehen, an dem auf dem Verschlusskörper befindlicher Teig beim Öffnen abgestreift wird. Der Linearabstreifer ist außerhalb der Bottichöffnung und oberhalb des tellerartigen Verschlusskörpers im Verfahrweg des Verschlusskörpers angeordnet. Die Anordnung erfolgt derart, dass abgestreifter Teig ebenfalls in ein unterhalb des Knetbottichs angeordnetes Transportmittel fällt.

DE 37 07 404 A1 offenbart eine Knetmaschine entsprechend dem Oberbegriff des Anspruchs 1 und ein Verfahren entsprechend dem Oberbegriff des Anspruchs 8.

Es ist Aufgabe der vorliegenden Erfindung den Abstreifer für den Verschlusskörper eines Knetbottichs einer Knetmaschine zu verbessern.

Diese Aufgabe wird von einer Knetmaschine für Teige mit den Merkmalen des Anspruchs 1 und einem Verfahren zum Abstreifen eines Verschlusskörpers einer Verschlusseinrichtung eines am Boden offenen Knetbottichs einer Knetmaschine für Nahrungsmittelteige mit den Merkmalen des Anspruchs 8 gelöst.

Demnach ist ein Knetmaschine für Nahrungsmittelteige aufweisend einen drehbaren Knetbottich, der in einem Boden eine zentrale Öffnung zum Austrag des Nahrungsmittelteiges hat, und eine Verschlusseinrichtung, die derart eingerichtet ist, die Öffnung in einer Betriebsstellung mittels eines verfahrbaren Verschlusskörpers zu verschließen und in einer Austragsstellung die Öffnung zum Austrag des Nahrungsmittelteigs freizugeben, vorgesehen, wobei die Öffnung von einem Abstreifring zumindest teilweise umgeben ist, der an dem Knetbottich befestigt ist, und der derart ausgebildet ist, dass er mit seiner Unterseite mit der Oberseite des Verschlusskörpers zum Abstreifen eines auf dem Verschlusskörpers befindlichen Nahrungsmittelteigs beim Verfahren des Verschlusskörpers von der Betriebsstellung in die Austragsstellung in Wirkverbindung steht. Der Abstreifring ist rotationssymmetrisch ausgebildet und weist einen kreiszylindrischen Grundkörper mit einer Öffnung auf, die bevorzugt an die Öffnung in der Bottichscheibe und dem Boden des Bottichs angepasst ist, an dem sich in Radialrichtung nach außen eine konisch erweiternde Dichtlippe anschließt. Durch die Verbindung des Abstreifrings mit dem Knetbottich kann der Teig zielgerichtet beispielswiese in einen unter den Knetbottich befindlichen Behälter oder auf ein Förderband abgestreift werden. Ein Verschmutzen der Verschlusseinrichtung kann so wirksam verhindert werden. Der Knetbottich ist bevorzugt für Teigmassen in einem Bereich zwischen 100 bis 1000 Kg ausgelegt. Die Nahrungsmittelteige sind bevorzugt Teige für Backwaren, insbesondere Kecks-, Brot-, Brötchen- oder Pizzateige. Es können aber auch Riegelmassen verarbeitet werden.

Gegenüber herkömmlichen Linearabstreifern weist der Abstreifring eine größere Fläche auf, die über einen längeren Zeitraum verschmutzt werden kann, bis es einer Reinigung bedarf. Beim Austrag des Nahrungsmittelteiges aus dem Knetbottich dreht sich der Abstreifring automatisch mit dem Knetbottich mit. An dem Abstreifring haftender Teig kann durch die Drehung beispielswiese in einen unter den Knetbottich befindlichen Behälter oder auf ein Förderband fallen. Zudem kann es sein, dass an dem Abstreifring haftender Teig bei der Drehung an den in der Austragsstellung befindlichen Verschlusskörper stößt und somit ebenfalls abfällt.

Der Abstreifring kann ganz allgemein als geschlossener, 360°-Ring ausgebildet sein oder über einen gewissen Kreissektor offen sein. Bevorzugt ist er ein geschlossener Ring, der die Öffnung vollumfänglich umgibt.

Der geschlossene Abstreifring hat den Vorteil, dass er unabhängig von der Drehlage des Knetbottichs stets für das Abstreifen zur Verfügung steht. Die Drehlage des Knetbottichs muss nicht überprüft werden. Bei jedem Abstreifvorgang kann ein anderer, nach Drehlage des Knetbottichs zur Verfügung stehender Bereich des Abstreifrings die Abstreiffunktion übernehmen. Der Abstreifring wird so nach und nach über die gesamte Fläche durch das wiederholte Abstreifen verdreckt, so dass er deutlich länger als das bei herkömmlichen Linearabstreifern der Fall ist, seine Funktion bis zur nächsten Reinigung beibehält.

Vorzugsweise sitzt der Knetbottich auf einer Plattform, wobei zwischen drehbarem Knetbottich und ortsfester Plattform ein die Öffnung umgebendes Wälzlager zur Lagerung des Knetbottichs gegenüber der Plattform vorgesehen ist, und wobei der Abstreifring das Wälzlager zumindest teilweise auf der Unterseite zum Schutz vor Verschmutzung abdeckt.

Bevorzugt ist der Abstreifring an einer Bottichscheibe mittels Befestigungsmittel befestigt, wobei der Knetbottich auf der Bottichscheibe sitzt und die Bottichscheibe rotatorisch antreibbar ist und eine zur Öffnung im Boden des Knetbottichs passende Öffnung aufweist.

In einer bevorzugten Ausführungsform weist das Wälzlager einen an der Unterseite der Bottichscheibe befestigten Innenring und einen an der Plattform befestigten Außenring auf, wobei der Abstreifring den Innenring auf der Unterseite überdeckt und somit das Lager vor Verschmutzungen schützt.

Vorzugsweise weist der Abstreifring am freien äußeren Ende der Dichtlippe eine erste ringförmige Nase an der bottichscheibennahen Oberseite auf, die eine Aufnahme für einen Randbereich der Plattform an einer zur Bodenöffnung passenden Öffnung der Plattform ausbildet. Der Raum in dem das Wälzlager angeordnet ist, kann so dicht abgeschlossen werden.

Bevorzugt weist der Abstreifring auf der bottichscheibenfernen Unterseite am freien äußeren Ende der Dichtlippe eine zweite ringförmige Nase auf, die die Abstreiffunktion übernimmt.

Der Abstreifring ist bevorzugt aus einem verschleißfesten, lebensmittelechten Kunststoff, insbesondere Polyethylen oder metalldetektierbares ultrahochmolekulares Polyethylen gebildet.

Weiterhin ist ein Verfahren zum Abstreifen eines Verschlusskörpers einer Verschlusseinrichtung eines am Boden offenen Knetbottichs einer Knetmaschine für Nahrungsmittelteige vorgesehen, wobei der Knetbottich in einem Boden eine zentrale Öffnung zum Austrag des Nahrungsmittelteiges aufweist, und die Öffnung von einem Abstreifring vollumfänglich umgeben ist, der an dem Knetbottich befestigt ist, wobei der Abstreifring rotationssymmetrisch ausgebildet ist und einen kreiszylindrischen Grundkörper mit einer Öffnung aufweist, an dem sich in Radialrichtung nach außen eine konisch erweiternde Dichtlippe anschließt, und das Verfahren folgende Schritte aufweist:
- Verfahren des Verschlusskörpers von einer Betriebsstellung, in der der Verschlusskörper die Öffnung verschließt in eine Austragsstellung, in der die Öffnung zum Austrag des Nahrungsmittelteigs freigegeben ist, wobei während des Verfahrens der Abstreifring eine Oberseite des Verschlusskörpers abstreift.

Die Knetmaschine und deren Komponenten, insbesondere der Abstreifring sind bevorzugt, wie oben beschrieben, ausgebildet.

Es ist bevorzugt, dass sich der Bottich nach dem Knetvorgang erst dreht, nachdem der Verschlusskörper die Öffnung freigegeben hat. Zum Austrag des Teiges drehen sich vorzugsweise sowohl der Bottich als auch das wenigstens eine Knetwerkzeug. An dem mitdrehenden Abstreifring befindliche Teigmasse kann durch die Rotation abfallen. Der Abstreifring kann somit durch die Drehung gesäubert werden. Bevorzugt befindet sich der Verschlusskörper in der Austragsstellung mit seiner äußeren Kante in unmittelbarer Nähe zu der äußeren Kante des Abstreifrings, insbesondere der zweiten ringförmigen Nase, so dass an dem Abstreifring befindliche größere Teigmassen bei der Rotation des Knetbottichs während des Austrags an den Verschlusskörper stoßen und von dem Abstreifring abfallen können.

Eine bevorzugte Ausführungsform der Erfindung wird nachfolgend anhand der Zeichnungen näher erläutert. Gleichartige oder gleichwirkende Bauteile werden in den Figuren mit denselben Bezugszeichen bezeichnet. Es zeigen:
- Figur 1:: eine räumliche Teilansicht einer Knetmaschine mit Knetbottich und Verschlusseinrichtung,
- Figur 2:: eine Detailansicht eines geschnittenen Abstreifrings der Verschlusseinrichtung,
- Figur 3:: eine räumliche Ansicht des Abstreifrings, sowie
- Figur 4:: einen Längsschnitt durch eine Hälfte des Abstreifrings.

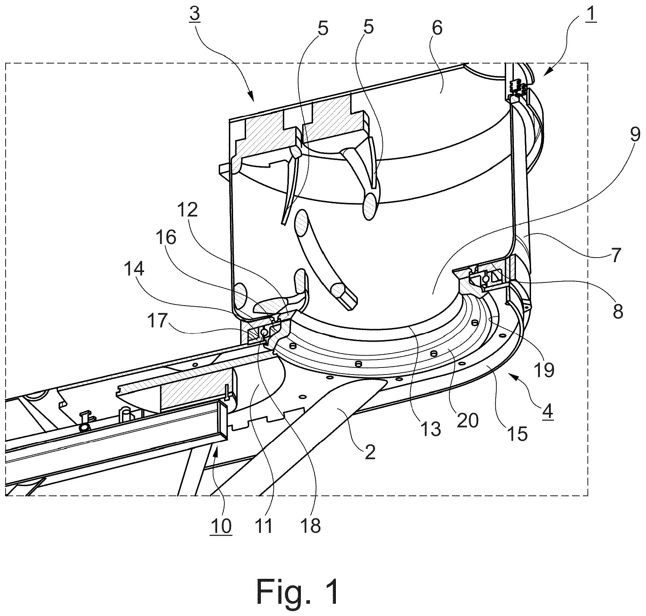

In der Figur 1 ist ein Ausschnitt einer Knetmaschine 1 zur Verarbeitung eines Nahrungsmittelteigs, insbesondere eines Backteigs dargestellt. Die Knetmaschine 1 weist ein Knetmaschinengestell 2 auf, dessen Kopfteil 3 um eine nicht dargestellte Schwenkachse zwischen einer unteren Betriebsstellung und einer oberen Reinigungsstellung gegenüber einem Unterteil 4 verschwenkbar ist. Das Kopfteil 3 trägt das Knetwerkzeug 5, hier dargestellt sind zwei entgegengesetzt drehende Wendelkneter, und den für eine Rotation des Knetwerkzeugs 5 benötigten nicht dargestellten Antrieb, sowie einen Deckel 6, der zum Abdecken des nach oben hin offenen Knetbottichs 7 vorgesehen ist. Im Unterteil 4 der Knetmaschine 1 sind der Knetbottich 7 und ein nicht dargestellter Elektromotor angeordnet. Der Elektromotor dreht den Knetbottich 7 um eine Rotationsachse gegenüber dem Knetmaschinengestell 2. Im Boden 8 des Knetbottichs 7 ist eine Öffnung 9 vorgesehen, die durch einen Verschlussmechanismus einer Verschlusseinrichtung 10 verschließbar ist. Die Verschlusseinrichtung 10 weist einen verfahrbaren Verschlusskörper 11 auf, der an die Öffnung 9 im Knetbottich 7 angepasst ist und im Wesentlichen tellerförmig ausgebildet ist. Die Öffnung 9 des Knetbottichs 7 wird von dem Verschlusskörper 11 in einer Verschlussstellung dicht verschlossen, so dass kein Teig aus der Bodenöffnung 9 austreten kann. Die Verschlusseinrichtung 10 umfasst weiterhin einen nicht dargestellten Elektromotor, der den Verschlusskörper 11 von der Verschlussstellung in eine Austragsstellung und vice versa verfährt. In der in Figur 1 dargestellten Austragsstellung ist die Öffnung 9 im Boden 8 des Knetbottichs 7 vollständig freigegeben.

Der Knetbottich 7 sitzt fest auf einer Bottichscheibe 12, die eine zur Bodenöffnung 9 korrespondierend Öffnung 13 aufweist. Die Bottichscheibe 12 ist bevorzugt aus Edelstahl gebildet. Sie 12 wird von einem nicht dargestellten Elektromotor rotatorisch angetrieben. Ein Wälzlager 14 lagert die Bottichscheibe 12 drehbar gegenüber einer an dem Knetmaschinengestell 2 raumfest gehaltenen Platform 15. Das Wälzlager 14 weist einen Innenring 16, einen Außenring 17 und dazwischen angeordnete Wälzkörper 18 auf. Der Innenring 16 ist an der Unterseite der Bottichscheibe 12 und der Außenring 17 ist an der Oberseite der Plattform 15 befestigt. Die Plattform 15 weist ebenfalls eine durchsetzende Öffnung 19 auf, deren Innendurchmesser größer als der Durchmesser der Öffnungen 13,9 im Bottichboden 8 und der Bottichscheibe 12.

An der Unterseite der Bottichscheibe 12 ist ein Abstreifring 20 drehfest befestigt. Der Abstreifring 20 umgibt die Öffnung 13 der Bottichscheibe 12 und schließt mit dieser auf der Innenseite bündig ab. Der Abstreifring 20 überdeckt nach unten hin den Innenring 16 des Wälzlagers 14 und einen Teil der Plattform 15. Der Abstreifring 20 weist einen Außendurchmesser auf, der größer ist als der Innendurchmesser der Öffnung 19 in der Plattform 15. Der Abstreifring 20 schützt dadurch das Wälzlager 14 vor Verschmutzung. Es wird verhindert, dass Schmutzpartikel und Feuchtigkeit in das Lager 14 gelangen.

Das Profil des Abstreifrings 20 ist derart gewählt, dass der Abstreifring 20 mit seiner Unterseite einen auf der Oberseite des Verschlusskörpers 11 befindliche Teigreste abstreift. Das Abstreifen erfolgt dabei während des Verfahrens des Verschlusskörpers 11 von der Verschlussstellung in die Austragsstellung.

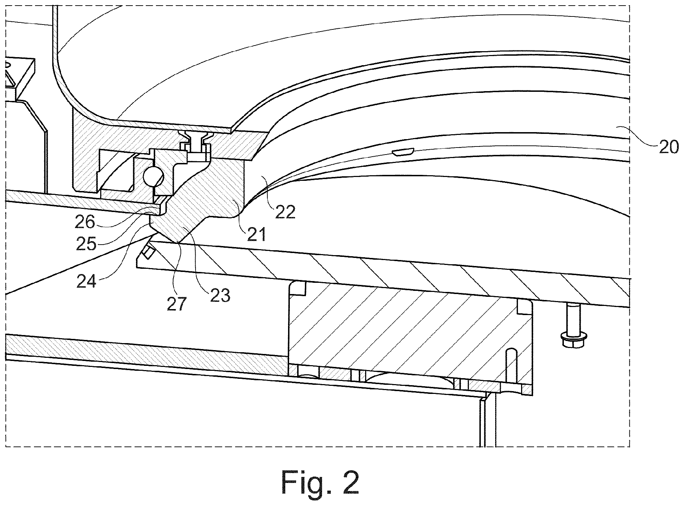

Die Figuren 2 bis 4 zeigen im Detail den Abstreifring 20. Der Abstreifring 20 ist rotationssymmetrisch. Er weist einen kreiszylindrischen Grundkörper 21 mit einer zentralen Öffnung 22 auf, an dem sich eine konisch erweiternde Dichtlippe 23 anschließt. Im eingebauten Zustand ist der Grundkörper 21 an der Bottichscheibe befestigt. Die Öffnung 22 des Abstreifrings 20 ist an die Öffnung 13 der Bottichscheibe angepasst, so dass sich eine von dem Boden 8 des Knetbottichs 7 ausgehende gemeinsame Öffnungen ausbildet, die eine ebene Innenseite ohne Kanten oder Stufen aufweist. Die Dichtlippe 23 erstreckt sich in Radialrichtung nach außen und von der Bottichscheibe weg zur Plattform hin. Am freien Ende der Dichtlippe 23 ist eine erste ringförmige Nase 24 an der bottichscheibennahen Oberseite vorgesehen, die eine Aufnahme 25 für einen Randbereich 26 der Plattform 15 an der Öffnung 19 ausbildet. Die Dichtlippe 23 steht so langeunabhängig in Anlage mit der Plattform 15 und dichtet das Wälzlager 14 nach hinten hin vor Verunreinigung ab. Auf der gegenüberliegenden, bottichscheibenfernen Unterseite ist eine zweite ringförmige Nase 27 ausgebildet, die die Abstreiffunktion übernimmt. Im Bereich der beiden Nasen 24,27 ist die Dichtlippe 23 im Längsschnitt etwa v-förmig ausgebildet, wobei ein erster Schenkel 28 in etwa 45° zu einer Längsrichtung liegt und der andere Schenkel 29 sich in Längsrichtung erstreckt. Die erste Nase 24 bildet somit in Radialrichtung zur Drehachse das äußerste Ende der Dichtlippe 23.

Figur 2 zeigt eine Zwischenstellung der Verschlusseinrichtung. Die zweite Nase 27 liegt auf der Oberseite des Verschlusskörpers 11 auf. Die Dichtlippe 23 ist zwischen Verschlusskörper 11 und Plattform 15 eingeklemmt.

Unabhängig von dem Drehwinkel des Knetbottichs 7 ist der Abstreifring 20 stets richtig positioniert. Beim Verfahren des Verschlusskörpers 11 in die Austragsstellung werden mittels des Abstreifrings 20 Teigrückstände auf der Oberseite des Verschlusskörpers 11 effektiv beseitigt.

Bevorzugt dreht sich der Bottich nicht, wenn der Verschlusskörper in die Austragsstellung verfahren wird. Durch die Nähe des Abstreifrings zu der Öffnung kann verhindert werden, dass abgestreifter Teig auf die Verschlusseinrichtung fällt, insbesondere auf einen Arm an dem der Verschlusskörper angebracht ist. Bei Linearabstreifern ist dies häufig ein Problem- Teigrückstände können in die Verschlusseinrichtung fallen und dort den Verstellmechanismus verkleben.

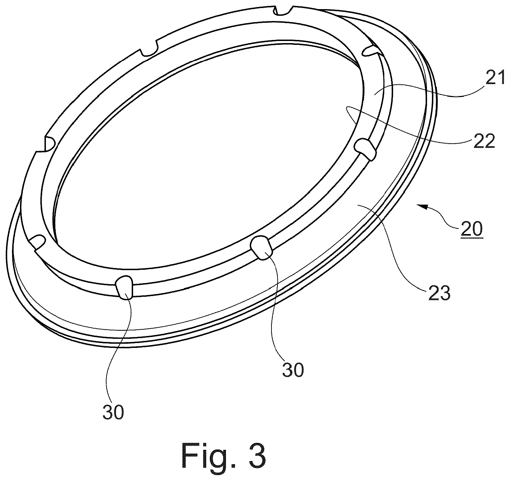

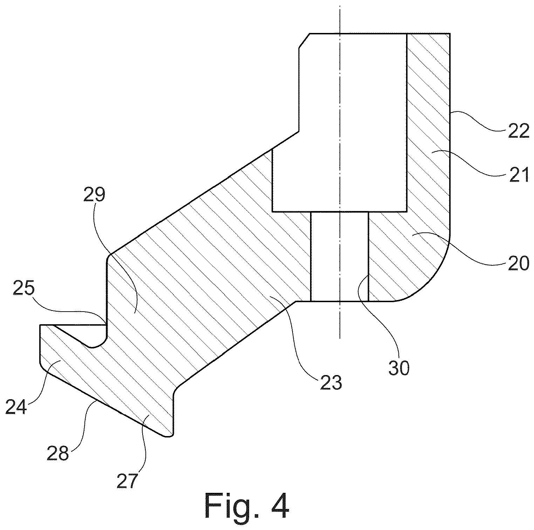

Die Figuren 3 und 4 zeigen den isolierten Abstreifring 20. Der zylindrische Grundkörper 21 weist in gleichmäßigen Abständen in Umfangsrichtung Bohrungen 30 zur Aufnahme der Befestigungsmittel, insbesondere Schrauben auf.

Der Abstreifring ist bevorzugt aus einem verschleißfesten, lebensmittelechten Kunststoff, insbesondere Polyethylen z. B RCH500, RCH100 oder metalldetektierbares ultrahochmolekulares Polyethylen (PE-UHMW/PE 1000), gebildet.

## Patentansprüche

1. Knetmaschine (1) für Nahrungsmittelteige aufweisend einen drehbaren Knetbottich (7), der in einem Boden (8) eine zentrale Öffnung (9) zum Austrag des Nahrungsmittelteiges hat, und eine Verschlusseinrichtung (10), die derart eingerichtet ist, die Öffnung (9) in einer Betriebsstellung mittels eines verfahrbaren Verschlusskörpers (11) zu verschließen und in einer Austragsstellung die Öffnung (9) zum Austrag des Nahrungsmittelteigs freizugeben, wobei die Öffnung (9) von einem Abstreifring (20) zumindest teilweise umgeben ist, der an dem Knetbottich (7) befestigt ist, und der derart ausgebildet ist, dass er mit seiner Unterseite mit der Oberseite des Verschlusskörpers (11) zum Abstreifen eines auf dem Verschlusskörpers (11) befindlichen Nahrungsmittelsteigs beim Verfahren des Verschlusskörpers (11) von der Betriebsstellung in die Austragsstellung in Wirkverbindung steht, und wobei der Abstreifring (20) rotationssymmetrisch ist, **dadurch gekennzeichnet, dass** der Abstreifring einen kreiszylindrischen Grundkörper (21) mit einer Öffnung (22) aufweist, an dem sich in Radialrichtung nach außen eine konisch erweiternde Dichtlippe (23) anschließt.

2. Knetmaschine (1) nach Anspruch 1, **dadurch gekennzeichnet, dass** der Abstreifring die Öffnung vollumfänglich umgibt.

3. Knetmaschine nach Anspruch 1 oder 2, **dadurch gekennzeichnet, dass** der Knetbottich (7) auf einer Plattform (15) sitzt, wobei zwischen drehbarem Knetbottich (7) und ortsfester Plattform (15) ein die Öffnung (9) umgebendes Wälzlager (14) zur Lagerung des Knetbottichs (7) gegenüber der Plattform angeordnet ist, und wobei der Abstreifring (20) das Wälzlager (14) zumindest teilweise auf der Unterseite zum Schutz vor Verschmutzung abdeckt.

4. Knetmaschine nach einem der vorhergehenden Ansprüche, **dadurch gekennzeichnet, dass** der Abstreifring (20) an einer Bottichscheibe (12) mittels Befestigungsmittel befestigt ist, wobei der Knetbottich (7) auf der Bottichscheibe (12) sitzt und die Bottichscheibe (12) rotatorisch antreibbar ist und eine zur Öffnung (9) im Boden (8) des Knetbottichs (7) passende Öffnung (13) aufweist.

5. Knetmaschine nach Anspruch 3 oder 4, **dadurch gekennzeichnet, dass** das Wälzlager (14) einen an der Unterseite der Bottichscheibe (12) befestigten Innenring (16) und einen an der Plattform (15) befestigten Außenring (17) aufweist und der Abstreifring (20) den Innenring (16) auf der Unterseite überdeckt.

6. Knetmaschine nach einem der vorhergehenden Ansprüche, **dadurch gekennzeichnet, dass** der Abstreifring (20) am freien äußeren Ende der Dichtlippe (23) eine erste ringförmige Nase (24) an der bottichscheibennahen Oberseite aufweist, die eine Aufnahme (25) für einen Randbereich (26) der Plattform (15) an einer zur Bodenöffnung passenden Öffnung (19) der Plattform ausbildet.

7. Knetmaschine nach einem der vorhergehenden Ansprüche, **dadurch gekennzeichnet, dass** der Abstreifring (20) auf der bottichscheibenfernen Unterseite am freien äußeren Ende der Dichtlippe (23) eine zweite ringförmige Nase (27) aufweist, die die Abstreiffunktion übernimmt.

8. Verfahren zum Abstreifen eines Verschlusskörpers (11) einer Verschlusseinrichtung (10) eines am Boden (8) offenen Knetbottichs (7) einer Knetmaschine (1) für Nahrungsmittelteige, wobei der Knetbottich (7) in einem Boden (8) eine zentrale Öffnung (9) zum Austrag des Nahrungsmittelteiges aufweist, und die Öffnung (9) von einem Abstreifring (20) zumindest teilweise umgeben ist, der an dem Knetbottich (7) befestigt ist, wobei der Abstreifring (20) rotationssymmetrisch ist, und das Verfahren folgende Schritte aufweist:
- Verfahren des Verschlusskörpers (11) von einer Betriebsstellung, in der der Verschlusskörper (11) die Öffnung (9) verschließt in eine Austragsstellung, in der die Öffnung (9) zum Austrag des Nahrungsmittelteigs freigegeben ist, wobei während des Verfahrens der Abstreifring (20) eine Oberseite des Verschlusskörpers (11) abstreift,
**dadurch gekennzeichnet, dass** der Abstreifring (20) einen kreiszylindrischen Grundkörper (21) mit einer Öffnung (22) aufweist, an dem sich in Radialrichtung nach außen eine konisch erweiternde Dichtlippe (23) anschließt.

9. Verfahren nach Anspruch 8, **dadurch gekennzeichnet, dass** der Knetbottich sich während des Verfahrens des Verschlusskörpers nicht dreht.

10. Verfahren nach Anspruch 8 oder 9, **dadurch gekennzeichnet, dass** die Knetmaschine (1) nach einem der vorhergehenden Ansprüche 1 bis 7 ausgebildet ist.

## Claims

1. Kneading machine (1) for food doughs comprising a rotatable kneading bowl (7) having in a bottom (8) a central opening (9) for the discharge of the food dough, and a closing device (10) which is adapted to close the opening (9) in an operating position by means of a movable closing body (11) and to release the opening (9) for the discharge of the food dough in a discharge position, the opening (9) being at least partially surrounded by a wiper ring (20) which is fastened to the kneading bowl (7) and which is designed in such a way that it is in operative connection with its underside with the upper side of the closure body (11) for wiping off a food dough located on the closure body (11) when the closure body (11) is moved from the operating position into the discharge position, and wherein the wiper ring (20) is rotationally symmetrical, **characterized in that** the wiper ring has a circular-cylindrical base body (21) with an opening (22), to which a conically widening sealing lip (23) adjoins outwardly in the radial direction.

2. Kneading machine (1) according to claim 1, **characterized in that** the wiper ring completely surrounds the opening.

3. Kneading machine according to claim 1 or 2, **characterized in that** the kneading bowl (7) is seated on a platform (15), wherein a rolling bearing (14) surrounding the opening (9) is arranged between the rotatable kneading bowl (7) and the stationary platform (15) for supporting the kneading bowl (7) relative to the platform, and wherein the wiper ring (20) covers the rolling bearing (14) at least partially on the underside for protection against contamination.

4. Kneading machine according to one of the preceding claims, **characterized in that** the wiper ring (20) is fastened to a bowl disk (12) by means of fastening means, the kneading bowl (7) being seated on the bowl disk (12) and the bowl disk (12) being drivable in rotation and having an opening (13) matching the opening (9) in the bottom (8) of the kneading bowl (7).

5. Kneading machine according to claim 3 or 4, **characterized in that** the rolling bearing (14) comprises an inner ring (16) fixed to the underside of the bowl disk (12) and an outer ring (17) fixed to the platform (15), and the wiper ring (20) covers the inner ring (16) on the underside.

6. Kneading machine according to one of the preceding claims, **characterized in that** the wiper ring (20) at the free outer end of the sealing lip (23) has a first annular lug (24) on the upper side close to the bowl disk, which lug forms a receptacle (25) for an edge region (26) of the platform (15) at an opening (19) of the platform matching the bottom opening.

7. Kneading machine according to one of the preceding claims, **characterized in that** the wiper ring (20) has a second annular lug (27) on the underside remote from the bowl disk at the free outer end of the sealing lip (23), which performs the wiper function.

8. Method for stripping a closure body (11) of a closure device (10) of a kneading bowl (7) of a kneading machine (1) for food doughs open at the bottom (8), wherein the kneading bowl (7) has a central opening (9) in a bottom (8) for discharging the food dough and the opening (9) is at least partially surrounded by a wiper ring (20) which is fixed to the kneading bowl (7), the wiper ring (20) being rotationally symmetrical, and the method comprising the following steps:
- Moving the closure body (11) from an operating position, in which the closure body (11) closes the opening (9), to a discharge position, in which the opening (9) is open for discharging the food dough, wherein during the movement the wiper ring (20) wipes an upper side of the closure body (11), **characterized in that** the wiper ring (20) has a circular-cylindrical base body (21) with an opening (22), to which a conically widening sealing lip (23) adjoins outwardly in the radial direction .

9. The method according to claim 8, **characterized in that** the kneading bowl does not rotate during the movement of the closure body.

10. Method according to claim 8 or 9, **characterized in that** the kneading machine (1) is designed according to one of the preceding claims 1 to 7.

## Revendications

1. Machine à pétrir (1) pour de la pâte alimentaire, comprenant une cuve de pétrissage rotative (7), qui présente dans un fond (8) une ouverture centrale (9) pour la distribution de la pâte alimentaire, et un dispositif de fermeture (10), qui est conçu, dans une position de fonctionnement, pour fermer l'ouverture (9) au moyen d'un corps de fermeture (11) mobile et, dans une position de distribution, pour libérer l'ouverture (9) pour une distribution de la pâte alimentaire, dans laquelle l'ouverture (9) est entourée au moins en partie par une bague de raclage (20), qui est fixée à la cuve de pétrissage (7), et qui est conçue de telle sorte qu'il est en liaison active via sa face inférieure avec la face supérieure du corps de fermeture (11) pour racler une pâte alimentaire se trouvant sur le corps de fermeture (11) lors du déplacement du corps de fermeture (11) de la position de fonctionnement à la position de distribution, et
la bague de raclage (20) est à symétrie de rotation, **caractérisée en ce que** la bague de raclage présente un corps de base (21) cylindrique circulaire avec une ouverture (22) à laquelle se raccorde une lèvre d'étanchéité (23) s'élargissant de manière conique dans une direction radiale vers l'extérieur.

2. Machine à pétrir (1) selon la revendication 1, **caractérisée en ce que** la bague de raclage entoure complètement l'ouverture.

3. Machine à pétrir selon la revendication 1 ou 2, **caractérisée en ce que** la cuve de pétrissage (7) repose sur une plate-forme (15), un palier à roulement (14) entourant l'ouverture (9) étant agencé entre la cuve de pétrissage rotative (7) et la plate-forme fixe (15) pour supporter la cuve de pétrissage (7) contre la plate-forme, et la bague de raclage (20) recouvrant au moins partiellement le palier à roulement (14) sur la face inférieure pour une protection contre la saleté.

4. Machine à pétrir selon l'une quelconque des revendications précédentes, **caractérisée en ce que** la bague de raclage (20) est fixée à un disque de cuve (12) au moyen de moyens de fixation, la cuve de pétrissage (7) reposant sur le disque de cuve (12) et la rondelle de cuve (12) pouvant être entraînée en rotation et présentant une ouverture (13) adaptée à l'ouverture (9) dans le fond (8) de la cuve de pétrissage (7).

5. Machine à pétrir selon la revendication 3 ou 4, **caractérisée en ce que** le palier à roulement (14) présente une bague intérieure (16) fixée sur la face inférieure du disque de cuve (12) et une bague extérieure (17) fixée sur la plate-forme (15), et la bague de raclage (20) recouvre la bague intérieure (16) sur la face inférieure.

6. Machine à pétrir selon l'une quelconque des revendications précédentes, **caractérisée en ce que** la bague de raclage (20) présente à une extrémité extérieure libre de la lèvre d'étanchéité (23) un premier ergot annulaire (24) au niveau de la face supérieure proche du disque de cuve, qui forme un logement (25) pour une zone de bord (26) de la plate-forme (15) au niveau d'une ouverture (19) de la plate-forme adaptée à l'ouverture de fond.

7. Machine à pétrir selon l'une quelconque des revendications précédentes, **caractérisée en ce que** la bague de raclage (20) présente, sur la face inférieure éloignée du disque de cuve, à l'extrémité extérieure libre de la lèvre d'étanchéité (23), un second ergot annulaire (27) qui assume la fonction de raclage.

8. Procédé pour racler un corps de fermeture (11) d'un dispositif de fermeture (10) d'une cuve de pétrissage (7) ouverte au niveau d'un fond (8) d'une machine à pétrir (1) pour de la pâte alimentaire, la cuve de pétrissage (7) présentant une ouverture centrale (9) dans un fond (8) pour une distribution de la pâte alimentaire, et l'ouverture (9) étant entourée au moins partiellement par une bague de raclage (20) qui est fixée à la cuve de pétrissage (7), la bague de raclage (20) étant symétrique en rotation, et le procédé comprenant les étapes suivantes consistant à :
- déplacer le corps de fermeture (11) à partir d'une position de fonctionnement, dans laquelle le corps de fermeture (11) ferme l'ouverture (9), vers une position de distribution, dans laquelle l'ouverture (9) est libérée pour une distribution de la pâte alimentaire, une face supérieure du corps de fermeture (11) étant raclée pendant le déplacement de la bague de raclage (20),
**caractérisé en ce que** la bague de raclage (20) présente un corps de base (21) cylindrique circulaire avec une ouverture (22) se raccordant une lèvre d'étanchéité (23) s'élargissant de manière conique dans une direction radiale vers l'extérieur.

9. Procédé selon la revendication 8, **caractérisé en ce que** la cuve de pétrissage ne tourne pas pendant le déplacement du corps de fermeture.

10. Procédé selon la revendication 8 ou 9, **caractérisé en ce que** la machine à pétrir (1) est réalisée selon l'une quelconque des revendications précédentes 1 à 7.
